# EUROPÄISCHE PATENTSCHRIFT

(11) **EP 1 285 023 B1**
(45) Veröffentlichungstag und Bekanntmachung des Hinweises auf die Patenterteilung: **29.12.2010**
(21) Anmeldenummer: 01925478.8
(22) Anmeldetag: 16.03.2001
(51) Int. Cl.: C08J 5/18, B32B 27/32

(54) **ELASTISCHE FOLIE**
ELASTIC FILM
FILM ELASTIQUE

(30) Priorität: 18.05.2000 DE 10024707
(43) Veröffentlichungstag der Anmeldung: 26.02.2003
(73) Patentinhaber: Nicola, Thomas, 57350 Spicheren (FR)
(72) Erfinder: NICOLA, Thomas, F-57350 Spicheren (FR)
(74) Vertreter: Isenbruck, Günter
(86) Internationale Anmeldenummer: PCT/EP2001/003030
(87) Internationale Veröffentlichungsnummer: WO 2001/088022

(56) Entgegenhaltungen:
- EP-A1- 0 781 651
- EP-A2- 0 631 859
- EP-A2- 0 739 713
- US-A- 5 498 476
- PATENT ABSTRACTS OF JAPAN vol. 1997, no. 11, 28. November 1997 (1997-11-28) & JP 09 174646 A (KAO CORP), 8. Juli 1997 (1997-07-08) & JP 09 174646 A (KAO CORP) 8. Juli 1997 (1997-07-08)

## Beschreibung

Die vorliegende Erfindung betrifft mehrschichtige elastische non-PVC Folien auf Polypropylen-Basis die unter den Bedingungen der Hitzesterilisation im wesentlichen formstabil sind, sowie deren Verwendung, beispielsweise in der Medizintechnik Femer betrifft die vorliegende Erfindung medizinische Beutel, welche mindestens eine derartige Folie umfassen.

In der Medizin besteht ein Bedarf an Folien für medizinische Beutel, welche bis zu mehreren Tagen einer Druckbelastung ausgesetzt werden können, beispielsweise als IV-Bags (Beutel für intravenös applizierte Medikamente) bei Druckmanschettenanwendung oder als Pulverkonzentratbeutel, bei denen während der Anwendung ein Innendruck entsteht.

Derartige Folien für medizinische Beutel wurden bisher in den meisten Fällen aus Polyvinylchlorid (PVC) hergestellt Die Verwendung von PVC bringt jedoch einige Nachteile mit sich. So besteht zum einen die Gefahr, daß in der PVC-Folie enthaltene Weichmacher freigesetzt werden und - im Fall der Verwendung der Folien in medizinischen Beuteln - beispielsweise in die darin enthaltene medizinische Lösung diffundieren können. Darüber hinaus wird beim Verspiegeln in der Hitze von PVC-Beuteln Salzsäure gebildet. Außerdem neigt PVC dazu, Medikamente aus Infusionslösungen zu absorbieren.

Es wurde daher versucht, PVC durch andere Kunststoffe zu ersetzen. Beispielsweise sind in DE 195 15 254 mehrschichtige non-PVC-Folien beschrieben, welche einen mindestens dreischichtigen Aufbau aus zwei äußeren Stützschichten und einer Mittelschicht aufweisen. Aus diesen Folien hergestellte Beutel sind jedoch einer Druckbelastung ohne bleibende Formveränderung nicht gewachsen. Unter dem Begriff "non-PVC-Folien" sind im folgenden Folien zu verstehen, die kein PVC enthalten.

Gereckte bzw. gestreckte Folien weisen gute mechanische Eigenschaften auf, sie sind beispielsweise druckstabil und können bei Verwendung mehrschichtiger Folien auch wasserdampfdicht ausgerüstet werden. Allerdings schrumpfen gereckte Folien beim Erwärmen und sind somit nicht hitzesterilisierbar.

In der EP-A 0 793 713 ist eine mehrlagige, hitzesterilisierbare Non-PVC-Folie beschrieben, die schlagzäh und zur Herstellung medizinischer Beutel geeignet ist. zur Formstabilität werden keine Angaben gemarcht.

Somit bestand die Aufgabe der vorliegenden Erfindung darin, Folien bereitzustellen, welche die Nachteile des Stands der Technik nicht aufweisen. Insbesondere sollen Folien bereitgestellt werden, aus denen Beutel und andere Behältnisse hergestellt werden können, welche formstabil und vorzugsweise hitzesterilisierbar sind. Femer sollten die Folien vorzugsweise biokompatibel sein.

Diese Aufgabe wird durch die in den Ansprüchen gekennzeichneten Ausführungsformen gelöst.

Insbesondere wird dreischichtige, elastische non-PVC Folie bereitgestellt, welche nicht verstreckt ist und deren Spannungs-Dehnungs-Diagramm keinen Punkt aufweist, in welchem die Steigung des Graphen < 0 ist, umfassend mindestens einen teilkristallinen Kunststoff mit einem Kristallisationsgrad von <50%, welcher aus flexiblen Polyolefinen auf Polypropylenbasis ausgewählt ist.

Folglich erleidet eine derartige Folie bei vorgegebener Dicke bis zu einer festgelegten Belastung bzw. einem festgelegten Druck keine wesentliche bleibende Formveränderung und verhält sich im wesentlichen elastisch. Im Fall einer Belastung oberhalb dieses Grenzwerts setzt die erfindungsgemäße Folie der äußeren Belastung bis zum Reißen einen mindestens gleichbleibenden, vorzugsweise stetig ansteigenden Widerstand entgegen, wobei sie sich plastisch, d.h. fließend, ausdehnt.

Die Figuren zeigen:
Figur 1 zeigt schematisch ein Spannungs-Dehnungs-Diagramm einer herkömmlichen thermoplastischen Folie.
Figur 2 zeigt schematisch die Spannungs-Dehnungs-Diagramme zweier Folien, welche die erfindungsgemäßen Eigenschaften aufweisen.
Figur 3 ist ein schematischer Schnitt durch eine mehrschichtige Ausführungsform einer erfindungsgemäßen Folie.
Figur 4 zeigt das Spannungs-Dehnungs-Diagramm einer dreischichtigen Folie gemäß Beispiel 1.

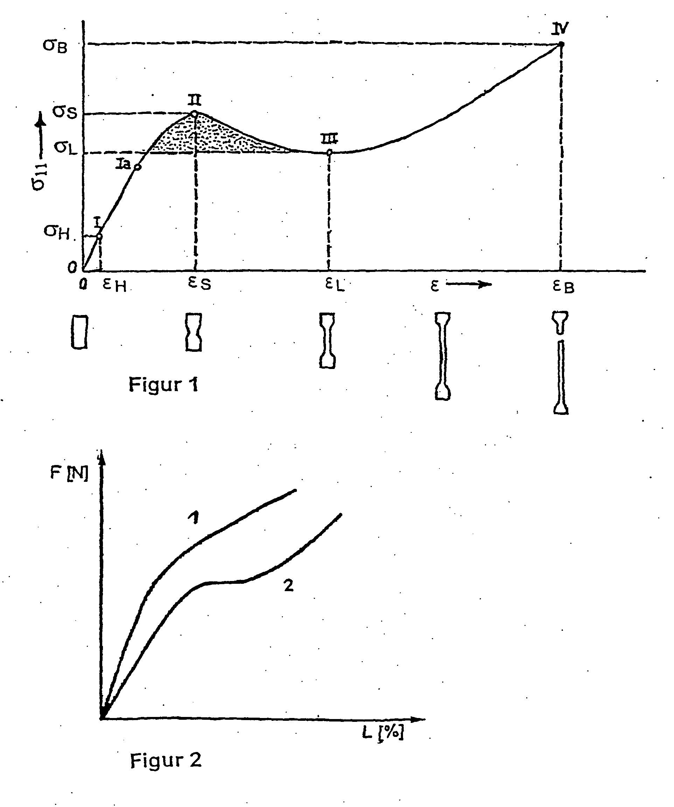

Fig. 1 zeigt das Spannungs-Dehnungs-Diagramm eines herkömmlichen thermoplastischen Materials. Übliche unverstreckte thermoplastische Folien können bis zu einem Schwellenwert, der oberen Streckspannung σₛ, eine gewisse Formstabilität und Elastizität aufweisen. Dann beobachtet man im Spannungs-Dehnungs-Diagramm das Durchlaufen eines Maximums II, des sogenannten "Yield-Punkts" (Streckgrenze), welcher durch die obere Streckspannung σₛ [N/mm²] (aus der auf die Fläche normierten Streckkraft Fₛ [N]) und die obere Fließgrenze εₛ bestimmt ist. Jenseits des Yield-Punkts nimmt die Verformung weiter zu, die Zugspannung nimmt jedoch ab, bis ein Minimum III durchlaufen ist. Herkömmliche thermoplastische Materialien weisen somit nach Überschreiten des Yield-Punkts (hier: Maximum II) einen Kurvenverlauf mit Bereichen negativer Steigung auf, d.h. es tritt ein Spannungsabfall auf und eine zunehmende Längenausdehnung der Folie erfolgt nach Überschreiten des Yield-Punkts nicht erst durch eine Erhöhung der Zugbelastung, sondern sogar bei geringerer Zugbelastung, als sie für das Erreichen des Yield-Punkts erforderlich war.

Im Zugexperiment ist der Yield-Punkt gewöhnlich durch eine Einschnürung des Probenkörpers zu erkennen, wobei dieses Verhalten auf molekularer Ebene durch das Ausrichten der Polymerketten entlang der Zugrichtung erklärt wird. Diese Einschnürung der Folie bzw. Ausrichtung der Polymerketten ist irreversibel, so daß bei abnehmender Zugbelastung die Folie ihre ursprüngliche Form nicht wieder annimmt. Somit stellt der Yield-Punkt den Grenzwert der Belastung dar, bis zu dem ein Material elastisch, d.h. reversibel auf eine Belastung reagieren kann bzw. ab dem sich das Material plastisch, d.h. im wesentlichen irreversibel verformt.

Erfindungsgemäß bezeichnet der Begriff Yield-Punkt diesen Grenzwert zwischen elastischem und plastischem Verhalten, wobei dieser Grenzwert erfindungsgemäß nicht mit einem Maximum in der Spannungs-Dehnungs-Kurve verbunden ist. Wie im folgenden beschrieben werden wird, ist erfindungsgemäß der Übergang zwischen elastischem und plastischem Verhalten fließend, die Spannungs-Dehnungs-Kurve weist im Yield-Punkt kein Maximum auf, d.h. der Yield-Punkt kann (a) im Spannungs-Dehnungs-Diagramm nicht erkennbar sein, (b) er kann durch eine Änderung der Steigung der Kurve bei gleichem Vorzeichen der Steigung erkennbar sein oder (c) der Yield-Punkt ist ein Wendepunkt der Kurve, so daß die Steigung der Kurve im Wendepunkt gleich 0 ist

Figur 2 zeigt schematisch die Kurvenverläufe der Spannungs-Dehnungs-Diagramme zweier beispielhafter erfindungsgemäßer Folien, welche kein Maximum aufweisen. In Figur 2 weist die mit der Ziffer 1 bezeichnete Kurve weder ein Maximum noch einen Wendepunkt auf, jedoch ändert sich nach Überschreiten eines Grenzwerts die Steigung der Kurve. Die mit der Ziffer 2 bezeichnete Kurve weist einen Wendepunkt auf, in welchem die Steigung gleich 0 ist Keine der beiden Kurven weist einen Punkt auf, in welchem die Steigung der Kurve negativ ist.

Auch die erfindungsgemäßen Folien, können nach Überschreiten eines Grenzwerts eine Einschnürung zeigen, welche irreversibel ist, so daß sie auch bei abnehmender Zugbelastung ihre ursprüngliche Form nicht wieder annehmen. Dabei tritt erfindungsgemäß ein plastisches Verhalten erst nach Überschreiten eines Schwellenwerts bzw. Grenzwerts auf, bis zu welchem das Material im wesentlichen keine bleibende Formveränderung zeigt, d.h. sich im wesentlichen elastisch verhält.

Unter dem Begriff "ein im wesentlichen elastisches Verhalten" wird erfindungsgemäß verstanden, daß ein Material, beispielsweise eine Folie, nach Wegnahme einer Belastung ihre ursprüngliche Form wieder annimmt, d.h. im wesentlichen keine bleibende Formveränderung erleidet.

Erfindungsgemäß wird unter dem Begriff "im wesentlichen keine bleibende Formveränderung" eine Formveränderung von höchstens 20%, vorzugsweise höchstens 15% verstanden. Dabei umfaßt der Begriff Formveränderung" gemäß dieser Erfindung sowohl eine Verzerrung der bzw. Abweichung von der ursprünglichen geometrischen Form, d.h. eine Deformation, als auch eine reine Längenausdehnung ohne eine Verzerrung der Form.

Erfindungsgemäß kann ein Spannungs-Dehnungs-Diagramm durch einen Zugversuch, beispielsweise gemäß DIN 53 455 oder DIN 53 504, gemessen werden. Dazu wird ein Prüfstück einer bestimmten Länge L₀ und Querschnittsfläche A₀ in eine Zugmaschine eingespannt und mit konstanter Geschwindigkeit bis zum Zerreißen gedehnt. Die hierzu erforderliche Kraft F wird als Funktion der jeweiligen Länge des Prüfstücks registriert. Die in jeder Phase des Experiments festgestellte nominelle Zugspannung σ = F/A₀ wird anschließend in einem Spannungs-Dehnungs-Diagramm gegen die jeweilige Dehnung ε = (L-Lo)/Lo aufgetragen. Bei Prüfstücken einer genormten Länge und Querschnittsfläche kann auch die erforderliche Kraft F anstelle der Zugspannung aufgetragen werden. Gemäß DIN 53 504 wird in einer Kraft-Längenänderungs-Kurve die Beziehung zwischen der Zugkraft und Längenänderung des Probekörpers während des Verlaufs des Zugversuchs bis zum Reißen aufgezeichnet.

Die erfindungsgemäße Folie umfaßt mindestens ein(en) teilkristallines/n Polymer bzw. Kunststoff. Erfindungsgemäß ist der teilkristalline Kunststoff weitgehend amorph, wobei der Begriff "weitgehend amorpher Kunststoff" eine polymere Verbindung mit einem Kristallisationsgrad von < 50% bezeichnen soll, und ist ausgewählt aus flexiblen polyolefinen auf polypropylen basis.

Unter einem Kunststoff werden erfindungsgemäß polymere Materialien verstanden, deren Hauptbestandteil aus makromolekularen organischen Verbindungen bzw. Polymeren besteht, wobei die polymeren Materialien sowohl Homopolymere als auch Copolymere sowie Mischungen und Blends sein können.

Bevorzugt sind flexible Polyolefine auf Polypropylen (PP)-Basis und gegebenenfalls Polyethylen (PE)-Basis wie WL 203, WL 209 und WL 116 der Fa. Huntsman Corp. Weiterhin bevorzugt sind Styrol-Isopren-Styrol(SIS)-Blockcopolymere und Mischungen und Blends davon, wie Hybrar® der Fa. Kuraray.

Die vorstehenden Polymere können als Blockcopolymere, statistische Copolymere, Pfropfcopolymere und/oder Mischungen oder Blends eingesetzt werden.

Die vorliegende Erfindung betrifft auch die Verwendung der vorstehenden Kunststoffe als Folie.

Vorzugsweise weisen mindestens die äußeren Schichten einen Erweichungspunkt nach Vicat oberhalb von etwa 121 °C auf, während innen liegende Schichten auch einen niedrigeren Erweichungspunkt aufweisen können. Die Dicke der einzelnen Schichten ist unkritisch. Vorzugsweise weisen Schichten mit einem Erweichungspunkt oberhalb 121°C eine Dicke von 10 bis 100 µm, besonders bevorzugt 10 bis 50 µm, und eine innen liegende Schicht mit einem Erweichungspunkt unterhalb 121 °C eine Dicke von mindestens 60 µm auf. Des weiteren kann, falls erforderlich, eine sogenannte Siegelschicht bereitgestellt werden, welche vorzugsweise als eine äußere Schicht angeordnet ist. Diese Siegelschicht kann das Verschweißen der erfindungsgemäßen Folie ermöglichen bzw. verbessern. Für die Siegelschicht setzt man im allgemeinen Polymere ein, die lösungsverträglich sind, da die Siegelschicht bei einem aus der erfindungsgemäßen Folie hergestellten Beutel nach Fertigstellung des Beutels im Innenbereich liegt. Für die einzelnen Schichten sind auf Polypropylen und Polyethylen basierende Materialien, gegebenenfalls in Kombination mit Schichten von SIS-Copolymeren besonderes bevorzugt.

Eine erfindungsgemäße Folie wird vorzugsweise durch Coextrusion hergestellt.

Die erfindungsgemäßen Folien sind - abgesehen von einer herstellungsbedingten Orientierung von weniger als etwa 2% - nicht gereckt bzw. verstreckt und schrumpfen daher beim Erwärmen praktisch nicht.

Femer sind die erfindungsgemäßen Folien vorzugsweise hitze- bzw.- heißsterilisierbar. Medizinische Geräte und Behälter werden üblicherweise durch Dampfsterilisation bei etwa 121 °C im Autoklaven behandelt. Die erfindungsgemäßen ein- oder mehrschichtigen Folien sind vorzugsweise bei diesen Temperaturen unter Autoklavierbedingungen noch formstabil.

Die Erweichungstemperatur wird für Polymer- und Kunststoffmaterialien der Erfindung nach Vicat VST/A/50 bestimmt, d.h. sie ist als diejenige Temperatur definiert, bei der in eine zunehmend erwärmte Kunststoffprobe ein belasteter Stahlstift mit einem Querschnitt von 1 mm² 1 mm tief in die Kunststoffprobe eingedrungen ist (vgl. DIN-Iso-Norm 306, ASTM D1525). Die Erweichungstemperatur liegt meist wesentlich niedriger als diejenige Temperatur, bei der die polymere Substanz vollständig einen quasi flüssigen Zustand erreichen würde.

Die erfindungsgemäßen Folien weisen vorzugsweise eine Dicke bzw. Stärke von mindestens 50 µm auf. Besonders bevorzugt weisen die erfindungsgemäßen Folien eine Dicke von 50 bis 500 µm auf.

Darüber hinaus sind die erfindungsgemäßen Folien vorzugsweise nicht oder nur wenig für Wasserdampf durchlässig, d.h. sie bilden eine Barriere für Wasserdampf, und weisen auch in der Kälte eine gute Schlagzähigkeit auf. Es ist weiterhin bevorzugt, daß die erfindungsgemäßen Folien transparent sind.

Die erfindungsgemäßen Folien sind gemäß bevorzugten Ausführungsformen im wesentlichen frei von Gleitmitteln, Weichmachern, Antiblockmitteln, Antistatika, sowie Füllstoffen.

Die Herstellung der erfindungsgemäßen Folien kann durch übliche Formverfahren, wie Folienextrusion, unter Bildung einer Flach- oder Schlauchfolie erfolgen.

Die vorliegende Erfindung betrifft ferner die Verwendung der erfindungsgemäßen Folie auf dem Gebiet der Medizin, insbesondere als Ausgangsmaterial für die Herstellung von medizinischen Beuteln und Mehrkammerbeuteln, beispielsweise zum Aufbewahren von Infusionen und dergleichen.

Femer betrifft die vorliegende Erfindung medizinische Beutel, welche mindestens eine erfindungsgemäße Folie umfassen. Derartige Beutel sind vorzugsweise fallfest.

### Beispiele

### Beispiel

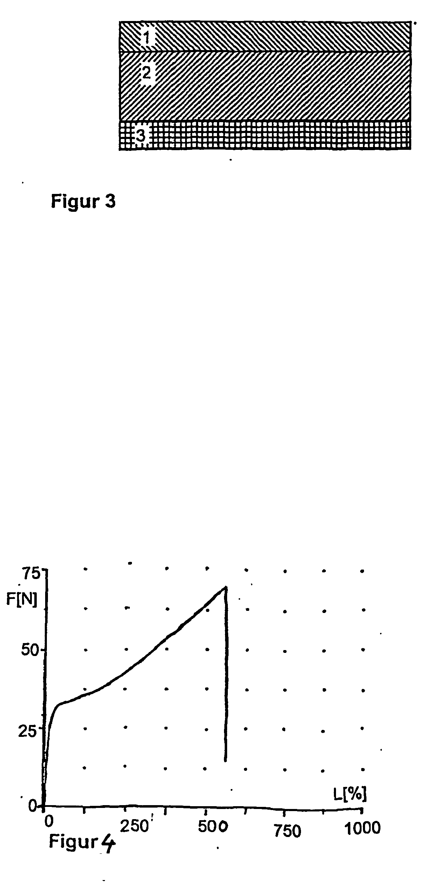

Eine dreischichtige Folie einer Dicke von 200 µm wurde durch Coextrudieren hergestellt. Der Aufbau der Folie ist schematisch in Figur 3 gezeigt. Die Schicht 1 weist eine Dicke von 30 µm auf und umfaßt das flexible Polyolefin WL 116 der Firma Huntsman Corp., die Schicht 2 weist eine Dicke von 140 µm auf und umfaßt das flexible Polyolefin WL 203 der Fa. Huntsman Corp.. Die dritte Schicht weist wiederum eine Dicke von 30 µm auf und umfaßt 85 Gew.-% PP232cs198 (Polypropylen-Kautschuk, Fa. Huntsman Corp.) und 15 Gew.-% Kraton® G 1652 (Styrol-Ethylen/Butylen(SEB)-Copolymer) der Fa. Shell.

Figur 4 zeigt die Zugdehnungskurve nach dem Sterilisieren bei 121°C. Wiederum weist die gemäß DIN 53 504 gemessene Kraft-Dehnungs-Kurve keinen Punkt mit negativer Steigung auf. Femer zeigt die Folie bis zu einem Schwellenwert ein elastisches Verhalten, im vorliegenden Beispiel bei 30 N.

## Patentansprüche

1. Dreischichtige, elastische non-PVC Folie, welche nicht verstreckt ist und deren Spannungs-Dehnungs-Diagramm keinen Punkt aufweist, in welchem die Steigung des Graphen < 0 ist, umfassend mindestens einen teilkristallinen Kunststoff mit einem Kristallisationsgrad von <50%, welcher aus flexiblen Polyolefinen auf Polypropylenbasis ausgewählt ist.

2. Folie nach Anspruch 1, welche hitzesterilisierbar ist.

3. Folie nach Anspruch 1 oder 2, welche einen Erweichungspunkt nach Vicat von > 121°C aufweist.

4. Folie nach einem oder mehreren der vorangehenden Ansprüche, welche eine Dicke von 50 bis 500 µm aufweist.

5. Verwendung einer Folie nach einem oder mehreren der Ansprüche 1 bis 4 zur Herstellung von medizinischen Beuteln.

6. Medizinische Beutel, umfassend mindestens eine Folie nach einem oder mehreren der Ansprüche 1 bis 4.

## Claims

1. A three-layer, elastic non-PVC foil which has not been oriented, and the tensile stress-strain diagram of which does not have any point at which the gradient of the graph is < 0, comprising at least one semicrystalline plastic with a degree of crystallization of < 50%, which has been selected from flexible polyolefins based on polypropylene.

2. The foil according to claim 1, which is heat-sterilizable.

3. The foil according to claim 1 or 2, which has a Vicat softening point of > 121°C.

4. The foil according to one or more of the preceding claims, the thickness of which is from 50 to 500 µm.

5. The use of a foil according to one or more of claims 1 to 4 for the production of medical bags.

6. A medical bag, comprising at least one foil according to one or more of claims 1 to 4.

## Revendications

1. Film élastique en trois couches, non en PVC, non étiré et dont le diagramme de contrainte-allongement ne présente aucun point auquel la pente de la courbe est < 0, et comprenant au moins une matière synthétique partiellement cristalline dont le degré de cristallisation est < 50 %, sélectionnée parmi les polyoléfines flexibles à base de polypropylène.

2. Film selon la revendication 1, apte à être stérilisé thermiquement.

3. Film selon les revendications 1 ou 2, dont le point d'amollissement selon Vicat est > 121°C.

4. Film selon l'une ou plusieurs des revendications précédentes, dont l'épaisseur est comprise entre 50 et 500 µm.

5. Utilisation d'un film selon l'une ou plusieurs des revendications 1 à 4 pour fabriquer des sacs médicaux.

6. Sac médical comprenant au moins un film selon l'une ou plusieurs des revendications 1 à 4.
